# DEMANDE DE BREVET EUROPEEN

(11) **EP 0 687 839 A1**
(43) Date de publication de la demande: **20.12.1995**
(21) Numéro de dépôt: 95401395.9
(22) Date de dépôt: 15.06.1995
(51) Int. Cl.: F16J 15/02, B60J 10/08

(54) **Joint d'étanchéité**

(30) Priorité: 15.06.1994 FR 9407293
(71) Demandeur: TECHNISTAN, F-92400 Courbevoie (FR)
(72) Inventeur: Tauziede, Jean Paul, F-95610 Eragny-sur-Oise (FR); Branjonneau, René Pierre, F-92700 Colombes (FR); Gallois, Jean-Paul, F-95300 Pontoise (FR)
(74) Mandataire: Hasenrader, Hubert

(57) **Abrégé**

L'invention concerne un joint d'étanchéité sous forme d'une bande continue comprenant au moins deux éléments d'étanchéité tubulaires (1,2) élastiquement déformables accolés et solidaires d'un élément de fixation (3) pourvu de deux branches définissant une section en U.

Selon l'invention, l'élément d'étanchéité tubulaire intérieur (1) assurant la liaison (31,32) avec l'élément de fixation (3) possède une section comportant deux zones angulaires d'inflexion (10,10') latéralement opposées et positionnées pour permettre localement le pliage et le rattachement d'au moins un tronçon (11,14) de la paroi dudit élément d'étanchéité intérieur (1) sur une des branches (31) de l'élément de fixation (3) en vue de déporter transversalement l'élément d'étanchéité extérieur (2) sans le déformer.

## Description

La présente invention concerne un joint d'étanchéité.

Elle se rapporte plus particulièrement à un perfectionnement aux joints sous forme d'une bande continue, comprenant au moins deux éléments d'étanchéité tubulaires, élastiquement déformables, accolés et raccordés à un élément de fixation pourvu de deux branches définissant une section en U.

Dans certaines conditions de montage, il est parfois nécessaire de décaler transversalement l'élément tubulaire situé le plus à l'extérieur par rapport à l'élément de fixation pour conserver dans les zones critiques de la feuillure de carrosserie, une étanchéité satisfaisante. C'est le cas notamment pour les ouvrants dans les zones de changement de plan c'est-à-dire aux endroits où le bord de fixation n'est plus aligné avec la ligne d'étanchéité.

Il est alors impossible avec un joint traditionnel d'assurer simultanément une bonne étanchéité et une bonne tenue mécanique du joint sur la carrosserie sans provoquer de déformation néfaste de l'élément d'étanchéité tubulaire.

La présente invention a pour but de résoudre ce problème technique de manière satisfaisante.

Ce but est atteint, selon l'invention, au moyen d'un joint du type précédent, dans lequel l'élément d'étanchéité tubulaire intérieur assurant la liaison avec l'élément de fixation possède une section comportant deux zones angulaires d'inflexion latéralement opposées et positionnées pour permettre localement le pliage et le rattachement d'au moins un tronçon de la paroi dudit élément d'étanchéité intérieur sur une des branches de l'élément de fixation en vue de déporter transversalement l'élément d'étanchéité extérieur sans le déformer.

Selon une caractéristique avantageuse, la section dudit élément d'étanchéité tubulaire intérieur est conformée en un polygone du type pentagone.

Selon encore une autre caractéristique, la géométrie de la branche de l'élément de fixation est adaptée au tronçon de rattachement de la paroi en regard de l'élément d'étanchéité intérieur.

En outre, les angles des zones d'inflexion et les longueurs respectives des tronçons adjacents de l'élément d'étanchéité intérieur sont déterminés en fonction de l'amplitude et du sens du déport recherché pour l'élément d'étanchéité extérieur.

Selon une variante de réalisation, le rattachement est réalisé par une zone de collage.

De plus, les zones d'inflexion sont à angles aigus.

L'invention s'applique aux joints d'étanchéité à deux éléments tubulaires ou plus.

Le joint de l'invention permet d'obtenir une étanchéité satisfaisante par appui de contact du pourtour de l'ouvrant sur l'élément d'étanchéité éventuellement déporté sans modifier la position de la feuillure ou la géométrie de l'élément de fixation.

Ainsi, la ligne d'étanchéité devient évolutive en s'adaptant à la géométrie de l'ouvrant tout en restant continue.

La présente invention sera mieux comprise à la lecture de la description qui va suivre accompagnée des dessins sur lesquels :
- la figure 1 représente une vue en coupe du joint de l'invention avant adaptation de l'élément d'étanchéité tubulaire ; et,
- la figure 2 représente une vue en coupe du joint de la figure après adaptation.

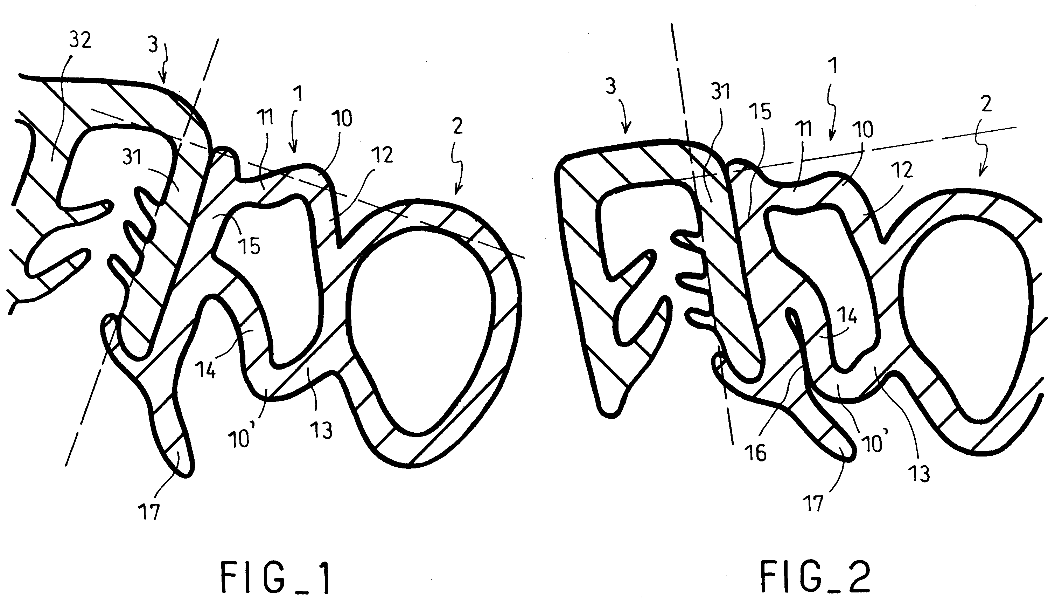

Le joint représenté sur les figures 1 et 2 comprend au moins deux éléments d'étanchéité tubulaires, élastiquement déformables, accolés ; respectivement un élément intérieur 1 et un élément extérieur 2. L'élément d'étanchéité intérieur 1 assure également la liaison avec un élément de fixation 3 pourvu de deux branches 31,32 définissant une section en U. L'élément d'étanchéité intérieur 1 possède une section avec deux zones angulaires d'inflexion 11,12 latéralement opposées. Les zones 11,12 sont positionnées pour permettre, localement, le pliage et le rattachement de la paroi de l'élément intérieur 1 sur la branche externe 31 de l'élément de fixation 3.

Le pliage est effectué par compression sur l'élément tubulaire 1 contre la branche 31.

La section de l'élément d'étanchéité intérieur 1 est conformée en polygone constitué d'un premier tronçon 11 raccordé perpendiculairement directement ou indirectement par une extrémité à la branche 31 de l'élément de fixation 3 et par son autre extrémité, selon un angle aigu, à un second tronçon 12, rattaché à la paroi de l'élément d'étanchéité tubulaire extérieur 2.

De même sur le côté en regard, latéralement opposé, la section est complétée par un troisième tronçon 13 intermédiaire entre la paroi de l'élément d'étanchéité extérieur 2 et un quatrième tronçon 14. Le quatrième tronçon 14 est relié avec un angle aigu au troisième tronçon 13 et de façon sensiblement perpendiculaire (directement ou indirectement) à la branche 31 de l'élément de fixation 3.

La liaison entre le premier tronçon 11 et le second tronçon 12 adjacents délimite une première zone angulaire d'inflexion 10 tandis que la liaison correspondante entre les troisième 13 et quatrième 14 tronçons délimite une seconde zone angulaire d'inflexion 10'.

Sur les figures 1 et 2, le premier tronçon 11 et le quatrième tronçon 14 sont reliés indirectement à la branche 31 par le biais d'un cinquième tronçon 15 formant un pied de raccordement. Le polygone est alors constitué d'un pentagone.

Les zones angulaires d'inflexion sont positionnées sur la section en polygone pour permettre localement le pliage et le rattachement partiel de la paroi de l'élément d'étanchéité intérieur 1 sur la branche 31. Ce rattachement est réalisé par collage ou soudure du premier tronçon 11 et/ou du quatrième tronçon 14 indirectement (ou directement) par le biais du cinquième tronçon 15, sur la branche 31 comme représenté sur la figure 2 et a pour effet de déporter transversalement l'élément d'étanchéité extérieur 2 sans le déformer. La zone de rattachement 16 correspond à toute ou partie de la longueur du quatrième tronçon 14 (et/ou du premier tronçon 11).

La géométrie de la branche 31 de l'élément de fixation 3 est adaptée aux tronçons destinés au rattachement.

Les angles des zones d'inflexion 10,10' et les longueurs respectives des tronçons de l'élément d'étanchéité intérieur 1 sont déterminés en fonction de l'amplitude et du sens de déport recherché pour l'élément d'étanchéité extérieur 2.

Le cinquième tronçon 15 (et/ou la branche 31) comporte éventuellement comme représenté sur les figures 1 et 2, une lèvre de prolongation 17 du côté de la zone de rattachement pour renforcer la tenue mécanique de l'élément d'étanchéité intérieur et caler le tronçon de rattachement. Selon une variante de réalisation, le tronçon de rattachement, par exemple, le quatrième tronçon 14 sur les figures 1 et 2 a une courbure concave permettant un arc-boutement sur la branche 31 ou sur la lèvre de prolongation 17.

## Revendications

1. Joint d'étanchéité sous forme d'une bande continue comprenant au moins deux éléments d'étanchéité tubulaires (1,2) élastiquement déformables, accolés et solidaires d'un élément de fixation (3) pourvu de deux branches définissant une section en U,
caractérisé en ce que l'élément d'étanchéité tubulaire intérieur (1) assurant la liaison (31,32) avec l'élément de fixation (3) possède une section comportant deux zones angulaires d'inflexion (10,10') latéralement opposées et positionnées pour permettre localement le pliage et le rattachement d'au moins un tronçon (11,14) de la paroi dudit élément d'étanchéité intérieur (1) sur une des branches (31) de l'élément de fixation (3) en vue de déporter transversalement l'élément d'étanchéité extérieur (2) sans le déformer.

2. Joint selon la revendication 1, caractérisé en ce que la section dudit élément d'étanchéité tubulaire intérieur (1) est conformée en un polygone du type pentagone.

3. Joint selon l'une des revendications 1 ou 2, caractérisé en ce que la géométrie de la branche (31) de l'élément de fixation (3) est adaptée au tronçon de rattachement (11,14) de la paroi en regard de l'élément d'étanchéité intérieur (1).

4. Joint selon l'une des revendications précédentes, caractérisé en ce que les angles des zones d'inflexion (10,10') et les longueurs respectives des tronçons adjacents (11,12,13,14) de l'élément d'étanchéité intérieur (1) sont déterminés en fonction de l'amplitude et du sens du déport recherché pour l'élément d'étanchéité extérieur (2).

5. Joint selon l'une des revendications précédentes, caractérisé en ce que le rattachement est réalisé par une zone de collage (16).

6. Joint selon l'une des revendications précédentes, caractérisé en ce que les zones d'inflexion (10,10') sont à angles aigus.

7. Joint selon l'une des revendications précédentes, caractérisé en ce que la paroi de l'élément d'étanchéité intérieur (1) comporte un tronçon (15) formant pied de raccordement sur la branche de rattachement (31) de l'élément de fixation (3).
